# EUROPEAN PATENT APPLICATION

(11) **EP 0 585 573 A2**
(43) Date of publication of application: **09.03.1994**
(21) Application number: 93111201.5
(22) Date of filing: 13.07.1993
(51) Int. Cl.: H04N 7/13, H04N 7/133

(54) **System and method for suppressing blocking artifacts in decoded transform coded images**

(30) Priority: 31.08.1992 US 938738
(71) Applicant: International Business Machines Corporation, Armonk, N.Y. 10504 (US)
(72) Inventor: De Garido, Diego Pinto, Troy, NY 12180 (US); Pennebaker, William Boone, Carmel, NY 10512 (US); Mitchell, Joan Laverne, Ossining, NY 10562 (US)
(74) Representative: Schäfer, Wolfgang, Dipl.-Ing.

(57) **Abstract**

A system and method for image processing is disclosed wherein blocking artifacts are decreased or removed in regions of slowly varying intensity, i.e., low activity, in an image reproduction decoded from a transform coded image representation. The de-blocking procedure may be applied to JPEG DCT-based decoded images, and AC prediction is done selectively only in regions of low activity and only if the AC prediction is consistent with known decoded AC coefficient values of lower precision than the predicted values.

## Description

### BACKGROUND OF THE INVENTION

### I. Field of the Invention

The present invention relates to electronic image processing, and more particularly to a system and method for suppressing blocking artifacts in regions of slowly varying intensity in an image reproduction decoded from a transform coded image representation.

### II. Prior Art

Various techniques are used in image processing for coding image data to compress and decompress image representations. A common technique involves Discrete Cosine Transform (DCT) coding and a particular example of image coding using the DCT is found in the JPEG Draft International Standard, International Standard DIS 10918-1 (JPEG DIS), and also CCITT Recommendation T.81. As will be understood, for example from the description in the JPEG DIS, incorporated herein by reference, DCT coding involves dividing image data into blocks having associated DC and AC coefficients. In low bit-rate DCT compression systems the decoded images usually exhibit blocking artifacts, i.e., stepped edges and regions where there are variations in intensity. These artifacts are due to discontinuities between the DCT blocks, because of a visible change in the DC level from block to block. At higher bit rates these discontinuities are removed by low frequency AC coefficients. However, at lower bit rates the low frequency AC coefficients are not of sufficient precision to suppress the discontinuities.

A standard technique for de-blocking is called AC prediction. In AC prediction the low frequency AC coefficients are predicted from the DC coefficient for a given block and the DC coefficients of the eight surrounding nearest neighbor blocks. This 3x3 array of blocks is fitted to a quadratic surface and a theoretical DCT is computed for the surface. The result is a set of predicted AC coefficients based on differences between the various DC levels in the 3x3 array.

This AC prediction technique is well known, and is described in detail in the JPEG DIS in Annex K, subclause K.8. It is described there as a decoder option, and the procedure discussed there for applying it to a decoder is also disclosed by C.A. GONZALES, ET AL, in C.A. Gonzales, L. Allman, T. McCarthy, P. Wendt and A.N. Akansu, "DCT Coding for Motion Video Storage Using Adaptive Arithmetic Coding", Signal Processing: Image Communications 2, 145-154 (1990), and in C.A. Gonzales and T. McCarthy, "Transform Coding using Coefficient Prediction Techniques", U.S Pat.No. 5,001,559, issued March 19, 1991, and assigned to the same assignee as the present invention. The procedure disclosed in the patent applies AC prediction to every block when decoding. As a result, the edge regions in a decompressed reproduced image may be blurred by the lack of discriminating between blocks in regions of slowly varying intensity and blocks in active regions. With this procedure, the AC prediction is thresholded to prevent it from ever exceeding a value which would have been quantized as non zero, and therefore transmitted or stored as part of the compressed data. The thresholded value is added to the decoded value to do the de-blocking.

Another approach to solving the block artifacts problem is found in U.S.Pat.No. 4,707,738, issued to A. FERRE, ET AL, and entitled "Adaptive Process for the coding and Decoding of a Sequence of Pictures by Transformation and Devices for Performing this Process". While this patent teaches "discriminating whether each block represents a highly animated or slightly animated scene", the discriminating is for the purpose of coding a sequence of images (Col.2, lines 26-28). The Background section mentions the problem of "demarcations between the blocks in the uniform zones of the pictures, because the eye is sensitive to limited brightness differences in uniform zones." (Col 2, lines 7-10). The suggested solution to the problem is to transmit or send differences between adjacent images in such slowly varying regions using neighborhood information within the picture.

U.S.Pat.No. 4,703,349, issued to J. BERNSTEIN, and entitled "Method and Apparatus for Multi-Dimensional Signal Processing Using a Short-Space Fourier Transform," is directed to solving the blocking problem by using over-lapped basis functions. In the Background section, Col. 2, lines 12-46, some of the other prior art efforts to reduce the visibility of the "blocking effect" are mentioned.

A paper by H.C. REEVE III and J.S. LIM, "Reduction of Blocking Effect in Image Coding", ICASSP'83, Boston, pp. 1212-1215, describes two methods to reduce blocking: the overlap method and the filtering method. It was found that the overlap method increased the bit rate, while the filtering method degraded edge content.

C. H. YIM and J.KIM in "A Simple DCT-CVQ based on Two DCT coefficients" Picture Coding Symposium '88, pp.8.11.1-8.11.2, Torino, Italy (Sept. 12-14, 1988) improve upon traditional DCT coding with Vector Quantization (VQ) by classifying images based on AC energy properties and edge patterns revealed in the DCT coefficients. This method uses just the two lowest frequency coefficients AC01 and AC10 to classify the blocks as homogeneous area and three edges of vertical, horizontal, and diagonal direction. It does not use the edge classification to selectively apply AC coefficient prediction.

K. NEMOTO and T. OMACHI in "Average Separation Method for DCT Coding Using Smooth Interpolation," Picture Coding Symposium '88, pp.8.12.1-8.12.2, Torino, Italy (Sept. 12-14, 1988), describe the problem of blockiness distortion occurring in decoded images for low bit rate coding. They solve the problem with a technique based on smooth interpolation. The disclosed method does not predict the AC coefficients and smooths the active regions as well as the slowly varying regions.

Another example of AC prediction was disclosed to the Joint Photographic Experts Group (JPEG) in standards document "Patent Status" by HITACHI, LTD, ISO/IEC JTC1/SC2/WG8 N-432, October 16, 1989. It describes the claims in Japanese Patent Application 62-196184, assigned to HITACHI, LTD., as covering a method generally involving receiving a DC coefficient, predicting some AC coefficients from a few DC coefficients of adjacent blocks, and then doing an inverse discrete cosine transform on the DC coefficient and the predicted AC coefficients. Apparently, the method only applies AC prediction to the first stage of JPEG progressive decoding when only the DC coefficient values have been decoded. No activity measure is used to selectively apply AC prediction and no decoded AC coefficients are used to determine if the predicted AC values are within a selected range so that a predicted value is used in decoding instead of the decoded value.

U.S.Pat.No. 4,698,689, "Progressive Image Transmission" to KOU-HS TZOU discloses a method of progressively transmitting and reconstructing an image in which an approximate image is reconstructed based upon partial information, and details are added as additional information becomes available. This system illustrates how the more coarsely quantized AC coefficient information would be available at low-bit rates but it does not predict the finer detail after having transmitted the partial information.

U.S.Pat.No. 4,774,574, "Adaptive Block Transform Image Coding Method and Apparatus," to S.J. DALY, ET AL., assigned to Eastman Kodak Company describes edge detection methods as part of an adaptive quantization process in which the blocks with high frequency details can be quantized differently from the blocks with only low frequency information. These methods do not use the information about frequency to selectively apply AC coefficient prediction.

EPO Patent Application 0283715, "Method of Coding Image Signals" by H. LOHSCHELLER, assigned to ANT Nachrichtentechnik GmbH, discloses a method that changes the thresholding for the quantization of the DCT coefficients as a function of the occurrence of edge structure in the image. The blocks are classified block-by-block and there is no use of the edge structure detection to selectively apply AC coefficient prediction.

### III. Problem to be Solved

There is therefore a problem in the image processing art with regard to the presence of blocking artifacts in regions of slowly varying intensity in image reproductions or reconstructions decoded from transform coded image representations and with the availability of satisfactory systems and methods for removing them.

Accordingly, it is an object of the present invention to provide a system and method capable of achieving improved de-blocking in image reproductions decoded from transform coded image representations.

It is a further object of the present invention to provide a system and method capable of achieving improved deblocking in decoded transform coded image representations transmitted or stored at low bit rates, and, as a particular example, in reproductions or reconstructions of JPEG DCT-based decoded images.

### SUMMARY OF THE INVENTION

The present invention involves a system and method for electronic image processing wherein blocking artifacts are decreased or removed in regions of slowly varying intensity, i.e., low activity, in an image reproduction decoded from a transform coded image representation. An improved de-blocking procedure is disclosed, which may be applied to JPEG DCT-based coded images, and wherein AC prediction is done selectively in decoding, i.e., only in regions of low activity and/or only if the prediction for a given AC coefficient is consistent with a known lower precision value already decoded for that coefficient.

More particularly, the system of the invention accepts electronic signals indicative of transform coded representations of an image for decoding, which signals are specifically indicative of DC and AC coefficient values of compressed blocks of image data representative of the image regions to be decoded. The system evaluates whether the region of the image being decoded is varying slowly or rapidly in intensity using a suitable technique, i.e., tests for activity to determine whether a region being decoded is of low activity or high activity, respectively, and the results of the evaluation are used as follows.

If the results of the testing indicate that the region being tested is varying rapidly in intensity, then no blocking correction is applied to the received signals when decoding. If the testing indicates that the region is varying slowly, then the blocking correction is applied to the received signals when decoding.

An alternative or additional technique involves determining whether the AC prediction value of one of the blocks of compressed image data received is within a selected range with respect to the received AC coefficient value, and if the AC prediction value of that one block is within the selected range, the AC prediction value is used in the inverse transform of the block. However, if the AC prediction value of that one block is not within the selected range, the decoded coefficient value is used in the inverse transform of the block. The selected range is preferably the range of original coefficient values that would have been quantized to the decoded quantized value during the forward transform coding of the image.

### BRIEF DESCRIPTION OF THE DRAWINGS

Figure 1 illustrates an 8x8 DCT coefficient array showing the DC coefficient and 63 AC coefficients.

Figure 2 is an illustration of a typical DCT block and the eight nearest neighbors used for AC prediction within that block.

Figure 3 shows an AC coefficient pattern used for zonal classification.

Figure 4 illustrates the relationship between the levels of the dequantized predicted AC coefficient and the dequantized decoded AC coefficient AC_{*l*}, and adjacent dequantized levels, AC_{*l*}₊₁ and AC_{*l*}₋₁.

### DESCRIPTION OF THE PREFERRED EMBODIMENTS

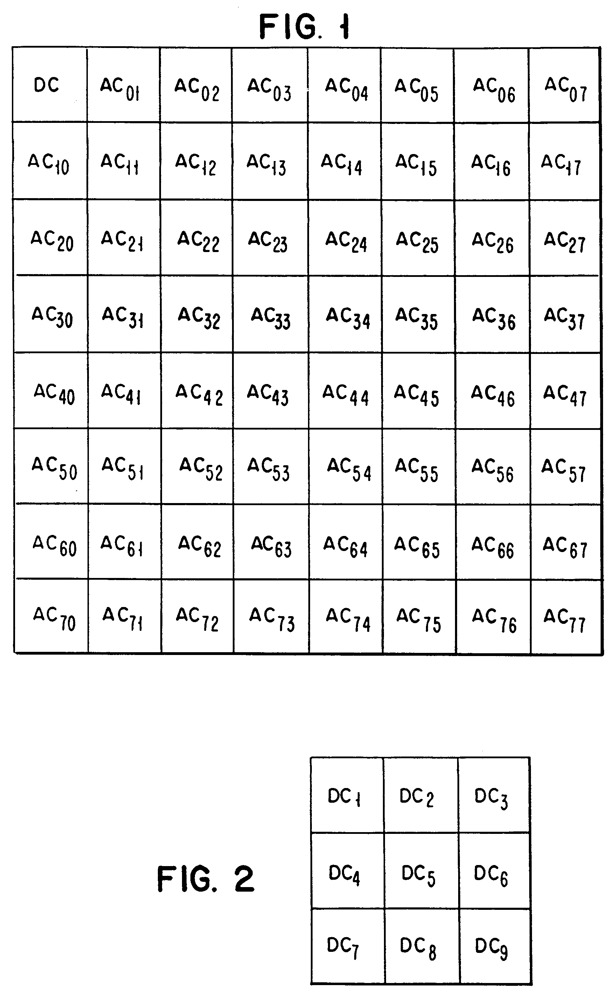

The present invention consists of a system and method that involve a new way of applying the standard technique for de-blocking called "AC prediction", which standard technique is described in detail, for example, in the above-cited JPEG DIS Annex K, subclause K.8. In AC prediction the low frequency AC coefficients of the elements in an image block are predicted from the DC coefficient of that block and the DC coefficients of the eight surrounding nearest neighbor blocks as shown in Figure 2. This 3x3 array of blocks is fitted to a quadratic surface and a theoretical DCT is computed for the surface. The result is a set of predicted AC coefficients based on differences between the various DC levels in the 3x3 array, which coefficients are used in decoding the transform coded image representations.

More particularly, the system of the invention accepts electronic signals, i.e., receives transmitted or stored signals, indicative of transform coded representations of an image for decoding, which signals are specifically indicative of DC and AC coefficient values of compressed blocks of image data representative of the image regions to be decoded. The system evaluates whether the region of the image being decoded is varying slowly or rapidly in intensity by using at least one of the following techniques:
spatial edge detection;
frequency edge detection;
zonal classification; and
threshold classification.

Spatial edge detection can be done by any of a number of well known techniques such as gradient operators, compass operators, zero crossings and stochastic gradients. The Sobel operator is one example of a spatial edge detection operator that may be found suitable, the details of which are described, for instance, in "Digital Image Processing," R.C. GONZALES and P. WINTZ, Addison-Wesley Publishing Co., Reading, Massachusetts, 1987, 2nd Edition. Another reference containing details on this and the other techniques is "Fundamentals of Digital Image Processing", A.K. JAIN, Prentice Hall, Englewood Cliffs, NJ, 1989, chapter 9.

Frequency edge detection techniques are applied in the transform domain. Since a direct relationship exists between geometrical features in a DCT block and the distribution of AC coefficients for that block, frequency edge detection can be done by looking at the features of the transformed block.

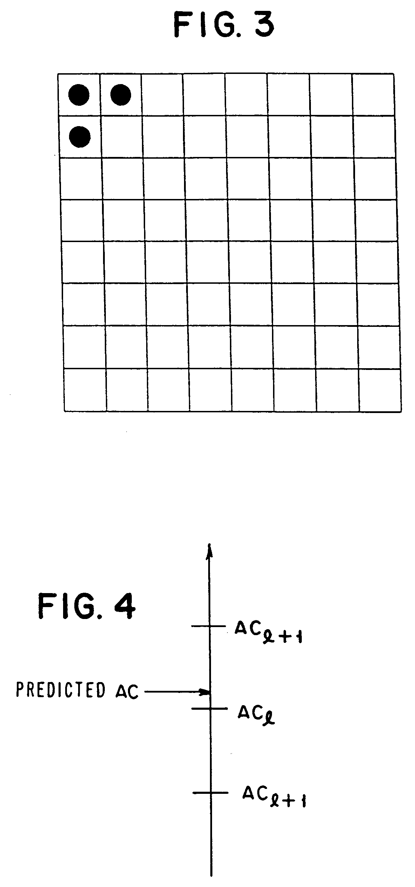

Zonal classification is a well known way to measure activity in an image. For example, a good model of a region of an image with slowly varying intensity can be achieved by allowing only the two lowest frequency AC coefficients, AC01 and AC10, to be non zero as shown in Fig. 3.

In threshold classification the activity of each block is determined by means of thresholds for each AC coefficient.

These activity classification techniques make use of some or all of the following parameters:
DC coefficients of the block being tested and at least one neighboring block;
DC coefficients of blocks which are neighbors of the block being tested;
one or more AC coefficients of the block being tested; and
one or more AC coefficients of blocks which are neighbors of the block being tested.

The AC prediction described in detail in the JPEG DIS Annex K, subclause K.8, is described as a decoder option, and the procedure discussed for applying it to a decoder, as in the above-cited C.A. GONZALES ET AL references, suggests that the AC prediction be thresholded to prevent it from ever exceeding a value which would have been quantized as non zero, and therefore transmitted or stored as part of the compressed data. The thresholded value is added to the decoded value to do the de-blocking when decoding.

In the present invention this procedure is preferably modified in two important ways which significantly improve the effectiveness of the de-blocking and which may be used alone or together.
1. An activity measure is applied to each block in the 3x3 array used for AC prediction, and only if all blocks in the 3x3 array are of low activity (as opposed to high activity) is AC prediction allowed in decoding the block in question. The reason that the activity of all of the blocks in the 3x3 array should be considered is that when a block exhibits high activity, the DC value for that block is very likely to be influenced by the local variations in that block. Consequently, the predictions of AC values in neighboring blocks based on the DC value of that active block are likely to be wrong.
2. If the 3x3 array is entirely low activity, the AC prediction is computed from the DC values to a precision which is higher than the precision of the decoded AC coefficients. The predicted value is then quantized to the same precision as the decoded value. If the decoded value is equal to the quantized predicted value, the correction is accepted. If the values are inconsistent, the decoded value is used without modification.

Alternatively, the predicted dequantized AC coefficient can be compared to the dequantized decoded values as shown in Figure 4. The predicted value is accepted in place of the decoded value if the predicted value falls within a range which, after quantization and dequantization, matches the decoded value.

A pseudo-code implementation of this scheme is as follows:

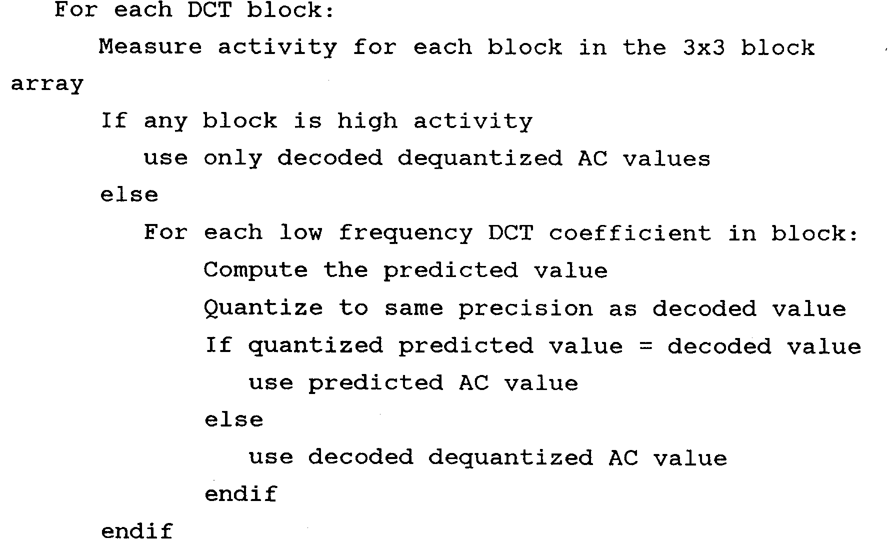

This combines both the activity measure and the consistency of the AC prediction with the decoded AC value.

The activity measure depends on the AC coefficient information known at the time the de-blocking is carried out. If only DC information is known, a standard operator such as the Sobel edge detection operator, noted above, can be used to determine activity. With suitable thresholding it will determine when AC Prediction can be applied.

However, if the AC coefficient information is known, it has been found that a simple measure of activity can be derived from the position of the end-of-block (EOB). The EOB provides a measure of the high frequency variations in the block, and it has been determined that a block should be considered active if any of the AC coefficients beyond the lowest frequency horizontal and vertical-terms are nonzero. This is a form of zonal classification.

The de-blocking scheme of the invention has been implemented and found to be very effective. For example, results obtained using the standard "Lena" image significantly remove blocking artifacts in smooth regions. The de-blocking is effective even in the smooth regions where the decoded low frequency AC coefficients are not zero. Furthermore, the activity measure prevents wrong AC predictions in regions containing edges and high activity.

The invention can be embodied in a system consisting of hardware or software or a combination of the two. For example, a DCT chip may be used in combination with a computer and software doing decompression and AC prediction. Also, a digital signal processor may be programmed to include the invention as part of its JPEG decoding function. Suitable programmable video compression processor chips for this purpose may be obtained, for example, from Integrated Information Technology, Inc., 2445 Mission College Boulevard, Santa Clara, CA 95054.

While the invention has been described with reference to a preferred embodiment thereof, that is, specifically as applied to still image JPEG algorithms, it will be understood by those skilled in the art that various changes in form and details may be made to adapt to other applications, such as moving picture sequences, without departing from the scope of the invention. For example, the invention has been illustrated using the 8x8 DCT block size in keeping with JPEG but applies equally well to other block sizes and other transforms.

## Claims

1. A method for removing blocking artifacts in regions of slowly varying intensity in an electronic image decoded from a transform coded representation of an image, comprising the steps of:
receiving signals indicative of DC and AC coefficient values of transformed blocks of image data representative of the image regions;
evaluating whether the region of the image being decoded is varying slowly or rapidly in intensity, and producing signals indicative of the results of said evaluation;
when said evaluation signals indicate said region is varying rapidly, applying no blocking correction to the received signals; and
when said evaluation signals indicate said region is varying slowly, applying a blocking correction to said received signals.

2. A method as in claim 1, wherein said evaluating step comprises using at least one of the following:
spatial edge detection;
frequency edge detection;
zonal classification; and
threshold classification.

3. A method as in claim 1 or 2, wherein said evaluating step comprises using at least one of the following parameters:
DC coefficients of the block being tested and at least one neighboring block;
DC coefficients of blocks which are neighbors of the block being tested;
one or more AC coefficients of the block being tested; and
one or more AC coefficients of blocks which are neighbors of the block being tested.

4. A method for removing blocking artifacts in regions of slowly varying intensity in an electronic image decoded from a transform coded representation of an original image, comprising the steps of:
receiving signals indicative of DC and AC coefficient values of transformed blocks of image data representative of the image regions;
determining whether the AC prediction value of one of said blocks of transformed image data is within a selected range with respect to the received AC coefficient value; and
if said AC prediction value of said one block is within said selected range, using said AC prediction value in decoding said block; and
if said AC prediction value of said one block is not within said selected range, using said received AC coefficient value in decoding said block.

5. A method as in claim 4, wherein said selected range comprises the range of original coefficient values that would have been quantized to the decoded quantized value during the forward transform coding of said original image block.

6. A method as in claim 4 or 5, wherein said determining step comprises using at least one of the following:
spatial edge detection;
frequency edge detection;
zonal classification; and
threshold classification.

7. A method for removing blocking artifacts in regions of slowly varying intensity in an electronic image decoded from a transform coded representation of an image, comprising the steps of:
receiving signals indicative of DC and AC coefficient values of transformed blocks of image data representative of the image regions;
evaluating whether the region of the image being decoded is varying slowly or rapidly in intensity, and producing signals indicative of the results of said evaluation;
when said evaluation signals indicate said region is varying rapidly, applying no blocking correction to the received signals; and
when said evaluation signals indicate said region is varying slowly, applying a blocking correction to said received signals, and wherein said blocking correction comprises the steps of:
determining whether the AC prediction value of one of said blocks of compressed image data is within a selected range with respect to the received AC coefficient value, and producing a signal indicative of the results of said determination;
when said signal indicative of the results of said determination indicates said AC prediction value of said one block is within said selected range, using said AC prediction value in decoding said block; and
when said signal indicative of the results of said determination indicates said AC prediction value of said one block is not within said selected range, using said received AC coefficient value in decoding said block,
wherein said selected range preferably comprises the range of original coefficient values that would have been quantized to the decoded quantized value during the forward transform coding of said original image block and/or
wherein said evaluating step preferably comprises using at least one of the following:
spatial edge detection;
frequency edge detection;
zonal classification; and
threshold classification.

8. A system for removing block artifacts in regions of slowly varying intensity in an electronic image decoded from a transform coded representation of an image, comprising:
means for receiving signals indicative of DC and AC coefficient values of compressed blocks of image data representative of the image regions to be decoded;
means, responsive to signals from said receiving means, for evaluating whether the region of the image being decoded is varying slowly or rapidly in intensity, and producing a signal indicative of the results of said evaluating;
means for applying a blocking correction to said received signals when said signal indicative of said evaluating results indicates said region is varying slowly; and
means for avoiding a blocking correction to said received signals when said signal indicative of said evaluating results indicates said region is varying rapidly,
wherein said evaluating means preferably comprises means for testing using at least one of the following:
spatial edge detection;
frequency edge detection;
zonal classification; and
threshold classification.

9. A system for removing blocking artifacts in regions of slowly varying intensity in an electronic image decoded from a transform coded representation of an original image, comprising:
means for receiving signals indicative of DC and AC coefficient values of transformed blocks of image data representative of the image regions;
means, responsive to signals from said receiving means, for determining whether the AC prediction value of one of said blocks of transformed image data is within a selected range with respect to the received AC coefficient value and producing a signal indicative of the results of said determination:
means for using said AC prediction value in decoding said block when said results signal indicates that said AC prediction value of said one block is within said selected range; and
means for using said received AC coefficient value in decoding said block when said results signal indicates that said AC prediction value of said one block is not within said selected range,
wherein said means for determining said selected range preferably comprises means for determining the range of original coefficient values that would have been quantized to the decoded quantized value during the forward transform coding of said original image block.

10. A method as in claim 9, wherein said means for determining comprises means for testing using at least one of the following:
spatial edge detection;
frequency edge detection;
zonal classification; and
threshold classification.
